# FASCICULE DE BREVET EUROPEEN

(11) **EP 1 760 614 B1**
(45) Date de publication et mention de la délivrance du brevet: **18.05.2016**
(21) Numéro de dépôt: 06119842.0
(22) Date de dépôt: 30.08.2006
(51) Int. Cl.: G06F 17/30

(54) **Mise à jour synchronisée de fichiers de données**
Synchronisierte Aktualisierung von Datendateien
Synchronised updating of data files

(30) Priorité: 31.08.2005 FR 0552628
(43) Date de publication de la demande: 07.03.2007
(73) Titulaire: Proton World International N.V., 1831 Diegem (BE)
(72) Inventeur: Ingels, Didier, 1367, GRAND ROSIERE (BE); Restiau, Guy, 1330, RIXENSART (BE)
(74) Mandataire: Thibon, Laurent

(56) Documents cités:
- US-A- 5 974 485
- US-A- 6 101 477
- US-B1- 6 622 205

## Description

### Domaine de l'invention

La présente invention concerne de façon générale les circuits électroniques à mémoire et, plus particulièrement, les circuits intégrant une mémoire à accès séquentiel.

L'invention s'applique notamment aux cartes à puce que la puce communique avec un lecteur avec ou sans contact.

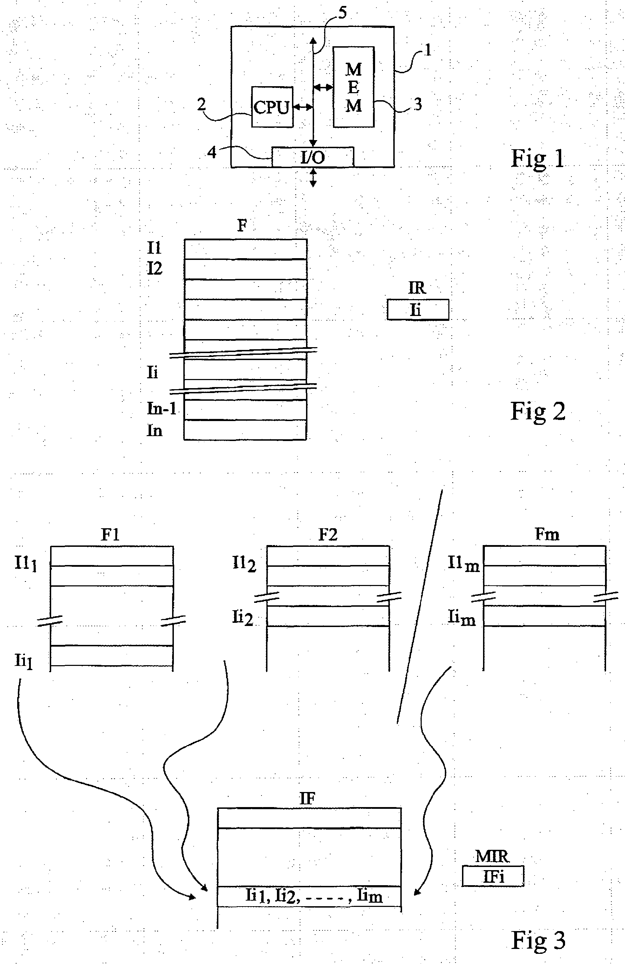

La figure 1 représente, de façon très schématique et sous forme de blocs, un exemple de circuit électronique 1 du type auquel s'applique la présente invention. Ce circuit 1 est par exemple destiné à être monté sur une carte à puce ou analogue et comporte notamment une unité centrale de traitement 2 (CPU), une ou plusieurs mémoires 3 dont au moins une mémoire à accès séquentiel, et un circuit 4 d'entrée/sortie (I/O) destiné à communiquer avec ou sans contact avec l'extérieur du circuit 1. Les différents éléments contenus dans le circuit communiquent par un ou plusieurs bus 5 de données, d'adresses et de commande et d'autres circuits (par exemple des capteurs) peuvent être intégrés au circuit 1.

### Exposé de l'art antérieur

De plus en plus, les fichiers de données traités par les microcircuits à mémoire des cartes à puce doivent être protégés contre des interruptions accidentelles ou volontaires lors de la mise à jour des données de ces fichiers en mémoire. Il peut s'agir par exemple du retrait d'une carte d'un lecteur à contact ou d'une perturbation dans le champ radio fréquence d'un transpondeur électromagnétique engendrant une interruption dans la mise à jour des données en mémoire. Si rien n'est fait pour que le microcircuit récupère des données correctes à la session suivante, le fonctionnement du circuit électronique s'en trouve perturbé.

La figure 2 illustre, de façon très schématique et sous forme de blocs, un exemple classique de mécanisme de mise à jour transactionnelle de fichiers utilisé dans des systèmes de traitement de fichiers. Une telle technique est connue sous la dénomination de mise à jour synchronisée ou "commit-rollback" et a pour objet de permettre au circuit de redémarrer sur des données correctes dans le cas où une mise à jour d'un fichier ou d'une mémoire s'est trouvée perturbée.

En figure 2, un fichier F est représenté par ses enregistrements successifs auxquels sont affectés des index I1, I2, ... Ii, ... In-1, In. Le fichier F est associé à un registre d'index IR fournissant, au circuit d'exploitation de la mémoire (par exemple, l'unité centrale 2), l'index de l'enregistrement courant sur lequel pointer dans le fichier. Le registre d'index IR n'est mis à jour qu'une fois que l'opération d'enregistrement dans la mémoire s'est correctement déroulée. Un tel mécanisme décrit en relation avec un fichier (indépendamment de son système de stockage en mémoire) s'applique bien entendu également de façon matérielle pour une zone mémoire.

Le mécanisme de mise à jour transactionnelle peut être dans un mode dit à préservation du passé (past prévention) où à préservation de l'avenir (futur prévention). Selon le cas, lorsqu'une mise à jour de données doit être effectuée dans le fichier, le registre d'index est mis à jour après (préservation du passé) ou avant (préservation de l'avenir) la mise à jour de ces données. Un tel mécanisme permet à l'unité centrale de récupérer les données pendant le fonctionnement du circuit en cas de problème quel qu'il soit.

L'utilisation d'un tel mécanisme de mise à jour devient difficile si plusieurs fichiers ou plusieurs zones mémoire sont concernés par le besoin de récupérer des données en cas d'interruption d'un des processus de mise à jour. Par exemple, dans une carte pour des applications de transport, une première transaction peut consister en la mise à jour du ticket électronique (décrément de sa valeur pour comptabiliser un trajet) alors qu'une autre transaction peut concerner la mise à jour d'un fichier statistique de l'utilisateur. Si une des deux transactions ne se termine pas, il serait souhaitable de pouvoir annuler l'autre ou prendre d'autres mesures appropriées.

Un problème lié à l'application à des circuits électroniques du type portés par des cartes à puce (cartes à microcircuit et à mémoire) est lié à la capacité de calcul généralement limité de ce type de circuit. Il n'est pas envisageable de mettre en place des systèmes de gestion de fichier complexes du type de ceux présents dans les ordinateurs.

Un autre problème est lié au besoin de rapidité de fonctionnement du mécanisme de mise à jour synchronisée en raison de la durée limitée pendant laquelle les cartes à puce concernées restent généralement en communication avec le lecteur les alimentant.

Ces problèmes excluent notamment le recours à des solutions consistant à regrouper plusieurs enregistrements de natures différentes au sein d'un même fichier pour s'assurer de leur mise à jour simultanée. En effet, ces fichiers doivent pouvoir être accédés individuellement par l'unité centrale en fonction des transactions opérées.

### Résumé de l'invention

La présente invention vise à pallier tout ou partie des inconvénients des systèmes de traitement de fichier des circuits électroniques à microcircuit et à mémoire, notamment dans des applications de cartes à puce ou analogues.

L'invention vise plus particulièrement un mécanisme de mise à jour synchronisée (commit-rollback) de plusieurs fichiers ou zones mémoire d'un circuit électronique.

L'invention vise également à préserver les propriétés et les conditions d'accès individuelles des différents fichiers.

L'invention vise également à proposer un mécanisme qui soit compatible avec des cartes dites à mémoire, c'est-à-dire dépourvues de microcontrôleurs.

La présente invention vise également un mécanisme compatible avec les deux modes de fonctionnement à préservation de l'avenir ou à préservation du passé d'un système de mise à jour synchronisée.

Pour atteindre tout ou partie de ces objets ainsi que d'autres, la présente invention prévoit un procédé de mise à jour de fichiers cycliques de données dans des éléments de mémorisation à accès séquentiels, comprenant les étapes de stocker, dans au moins un fichier d'index lui-même cyclique, des index respectifs des fichiers de données et, dans au moins un registre d'index, l'index courant du fichier d'index et comprenant une étape, de copie du contenu d'un enregistrement courant du fichier d'index dans l'enregistrement suivant du même fichier avant chaque mise à jour synchronisée des fichiers de données et comprenant une étape de mise à jour du registre d'index à la fin de la mise à jour synchronisée des fichiers de données.

Selon un mode de mise en oeuvre de la présente invention, des zones à accès séquentiels d'une mémoire sont affectées aux fichiers de données.

L'invention prévoit également un circuit électronique comportant au moins une mémoire à accès séquentiel et un circuit de gestion d'index de cette mémoire, et :
plusieurs zones de ladite mémoire affectées à des fichiers de données ;
au moins une zone affectée à un fichier d'index dont chaque enregistrement contient des index des fichiers de données ; et
au moins un élément de stockage de l'index courant du fichier d'index et des moyens pour la mise en oeuvre du procédé selon la revendication 1 ou 2.

L'invention prévoit également une carte à puce.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles:
la figure 1 qui a été décrite précédemment représente, de façon très schématique et sous forme de blocs, un exemple de circuit électronique du type auquel s'applique la présente invention ;
la figure 2 qui a été décrite précédemment illustre un exemple classique de systèmes de fichiers à registre d'index ;
la figure 3 représente, de façon très schématique, un mode de mise en oeuvre d'un mécanisme de mise à jour synchronisée de fichiers selon la présente invention ; et
les figures 4A, 4B et 4C illustrent des exemples de fonctionnement du mécanisme de la figure 3.

Les mêmes éléments ont été désignés par les mêmes références aux différentes figures. Pour des raisons de clarté, seuls les étapes et éléments qui sont utiles à la compréhension de l'invention ont été représentés aux figures et seront décrits par la suite. En particulier, l'exploitation des données par le circuit électronique contenant le mécanisme de traitement de fichier de l'invention n'a pas été détaillée, l'invention étant compatible avec toute destination classique de ces données. De plus, la nature des éléments de mémorisation (mémoire vive, mémoire non volatile réinscriptible, etc.) n'a pas été exposée, l'invention étant compatible avec toute mémoire pourvu qu'elle soit adaptée au stockage de fichiers cycliques, donc à accès séquentiel.

### Description détaillée

La présente invention tire profit du fait que les circuits électroniques des cartes à puce à mémoire exploitent le plus souvent, pour des questions de simplicité des circuits d'adressage, des mémoires à accès séquentiel et traitent des fichiers cycliques. De tels fichiers se caractérisent par le fait que les différents enregistrements sont remplis successivement et en boucle.

Une caractéristique d'un mode de mise en oeuvre de la présente invention est d'utiliser, en plus des fichiers cycliques principaux contenant des données liées à l'application, un fichier cyclique supplémentaire dont chaque enregistrement contient les index courants respectifs des différents fichiers cycliques de données. Ainsi, les différents fichiers cycliques ne sont pas individuellement associés à des registres d'index mais à un fichier d'index dont chaque enregistrement contient plusieurs index, ce fichier cyclique d'index étant lui-même associé à un unique registre d'index.

La figure 3 illustre, de façon très schématique, un mode de mise en oeuvre du mécanisme de mise à jour synchronisée selon la présente invention.

On suppose une carte à puce à microcircuit et à mémoire du type illustré par la figure 1 dans laquelle on souhaite gérer une mise à jour synchronisée de m fichiers de données ou principaux F1, F2, ... Fm. Chaque fichier de données est un fichier à accès séquentiel et cyclique contenant plusieurs enregistrements (figure 2) dont les positions respectives sont identifiables par des index Ii₁ (i₁ allant de 1 à n1) pour le fichier F1, Ii₂ (i₂ allant de 1 à n2) pour le fichier F2 et Iiₘ (iₘ allant de 1 à nm) pour le fichier Fm. Les nombres n1, n2, ... nm d'enregistrements des différents fichiers ne sont pas nécessairement identiques.

L'invention sera décrite par la suite en relation avec des fichiers indépendamment de leur zone de stockage pour faire référence à une mise en oeuvre logicielle. Toutefois, tout ce qui sera décrit transpose à des zones mémoire à accès séquentiels dans une mise en oeuvre matérielle.

Un fichier cyclique supplémentaire IF sert à stocker les différents index des fichiers F1 à Fm. En d'autres termes, chaque enregistrement du fichier IF contient m index. De plus, ce fichier d'index IF est associé à un registre d'index MIR contenant un seul élément, à savoir, l'index IFi de l'enregistrement courant dans le fichier IF.

Selon les applications, les différents fichiers seront stockés dans des zones de mémoire non volatiles du circuit électronique ou dans une mémoire vive. Par exemple, pour la mise à jour synchronisée de fichiers dans une application de tickets électroniques, le solde des transports disponibles sur le ticket électronique sera stocké en mémoire non volatile de même que les fichiers statistiques. Selon un autre exemple, la mise à jour synchronisée concerne des fichiers en mémoire vive. Dans ce cas, la mise à jour synchronisée concerne les transactions de mise à jour dans la mémoire mais pas d'éventuelles coupures d'alimentation.

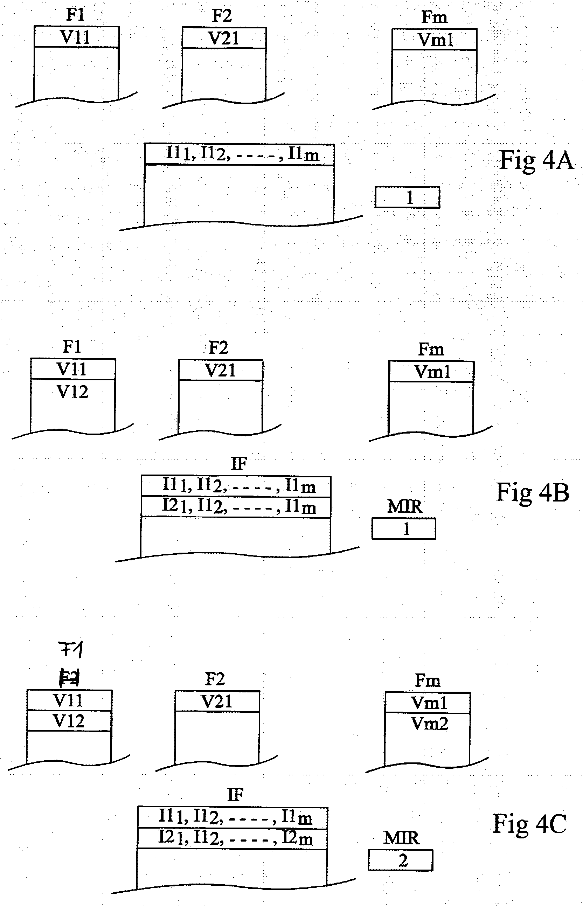

Les figures 4A, 4B et 4C illustrent, par des vues à rapprocher de celle de la figure 3, montrant les contenus respectifs des différents fichiers et registres, des exemples de fonctionnement du mécanisme de mise à jour synchronisée de l'invention.

A la fabrication ou à l'initialisation de la carte à puce (figure 4A), les différents index des fichiers principaux sont positionnés sur leurs premiers enregistrements respectifs et le registre d'index principal MIR contient donc la valeur 1. Le premier enregistrement du fichier d'index IF contient la succession des index I1₁, I1₂, ... I1ₘ des différents fichiers F1 à Fm. Les fichiers F1 à Fm contiennent respectivement des valeurs V11, V21, ... Vm1.

Au début d'une mise à jour synchronisée (figure 4B), le contenu de l'enregistrement du fichier d'index IF sur lequel pointe le registre MIR (ici, par exemple 1) est copié dans l'enregistrement suivant (index 2), mais le registre d'index n'est pas mis à jour et conserve sa valeur (par exemple 1). On suppose que le fichier F1 est mis à jour avec une nouvelle valeur V12 stockée dans son enregistrement suivant.

L'index dans le deuxième enregistrement du fichier IF est alors mis à jour sur la valeur I2₁. Tant que la mise à jour synchronisée de tous les fichiers n'est pas terminée, le registre d'index MIR conserve la valeur 1 et n'est pas mis à jour pour obtenir la valeur du deuxième enregistrement.

En figure 4C, on suppose qu'à la fin de la mise à jour synchronisée, le deuxième fichier F2 n'a pas eu besoin d'être mis à jour mais que le dernier fichier Fm a été mis à jour vers une valeur Vm2 (les autres fichiers ne sont pas représentés et peuvent se comporter soit comme le fichier F2, soit comme le fichier Fm). Il en découle que le deuxième enregistrement du fichier d'index IF contient les valeurs I2₁, I1₂, ... I2ₘ. A la fin de la mise à jour synchronisée des différents fichiers, le registre d'index principal MIR est incrémenté pour contenir la valeur 2.

Dans le cas d'une mise à jour synchronisée avec préservation du passé, la lecture d'un fichier s'effectue sur la base de l'index contenu dans l'enregistrement courant du fichier d'index. Par conséquent, en cas d'interruption de la mise à jour avant sa fin, le système se base sur l'index 1 du registre MIR de sorte que les contenus de tous les fichiers reprennent la valeur avant la mise à jour. En cas de rupture de la mise à jour synchronisée ou d'une mise à zéro de la carte, celle-ci se retrouve automatiquement dans l'état précédent les mises à jour des fichiers puisque l'index du fichier d'index IF vaut 1.

Dans le cas d'une mise à jour synchronisée avec préservation du futur, la lecture d'un fichier s'effectue sur la base de l'index contenu dans l'enregistrement du fichier d'index qui suit celui pointé par le registre MIR. Par conséquent, en cas d'interruption de la mise à jour avant sa fin, le système se base sur l'index 2, de sorte que les contenus des fichiers qui ont eu le temps d'être mis à jour sont pris en compte.

La carte est informée de ce mode de fonctionnement soit par le lecteur, soit est paramétrée à la fabrication ou à la programmation. On voit que le mécanisme de l'invention est compatible avec les deux modes sans modifier le mode d'enregistrement des fichiers.

Selon un mode de réalisation simplifié, où la préservation du passé ou du futur ne concerne qu'un événement, les différents fichiers ne contiennent que deux enregistrements.

Selon un autre mode de réalisation, la taille des différents fichiers est plus importante et l'invention permet alors de gérer l'historique de la carte sur une durée correspondant à la taille du fichier d'index IF.

Selon un autre mode de mise en oeuvre de l'invention, plusieurs fichiers d'index reprenant des plages d'index chevauchantes ou non sont utilisés.

Un avantage de la présente invention est qu'elle permet de gérer un mécanisme de mise à jour synchronisée de façon simple avec des ressources matérielles limitées.

Un autre avantage de l'invention est qu'elle est compatible avec une carte à mémoire dépourvue de microcontrôleur. En effet, les index nécessaires à la gestion du mécanisme de mise à jour synchronisée sont eux-mêmes contenus dans des zones mémoire sous la forme d'enregistrements d'un fichier cyclique.

Un autre avantage de la présente invention est que le mécanisme d'index délocalisé dans le fichier d'index permet la gestion de l'historique du fonctionnement du circuit.

Bien entendu, la présente invention est susceptible de diverses variantes et modifications qui apparaîtront à l'homme de l'art. En particulier, bien que l'invention ait été décrite plus particulièrement en relation avec une carte à mémoire dépourvue de microcontrôleur, elle est bien entendu également compatible aux cartes pourvues d'un microcontrôleur. De plus, la mise en oeuvre pratique de l'invention par des moyens logiciels ou matériels est à la portée de l'homme du métier à partir des indications fonctionnelles données ci-dessus. En outre, la mise en oeuvre de l'invention peut être combinée avec le maintien, pour certains fichiers, d'un registre d'index.

## Revendications

1. Procédé de mise à jour de fichiers cycliques de données (F1, F2, ... Fm) dans des éléments de mémorisation à accès séquentiels, **caractérisé en ce qu'**il comporte les étapes de :
stocker, dans au moins un fichier d'index (IF) lui-même cyclique, des index respectifs (Ii₁, Ii₂, ... Iiₘ) des fichiers de données ;
stocker, dans au moins un registre d'index (MIR), l'index courant (IFi) du fichier d'index ;
copier le contenu d'un enregistrement courant du fichier d'index (IF) dans l'enregistrement suivant du même fichier avant chaque mise à jour synchronisée des fichiers de données (F1, F2, ... Fm) ;
mettre à jour un fichier courant avec une nouvelle valeur ;
mettre à jour l'index dans l'enregistrement suivant du fichier d'index ; et
mettre à jour le registre d'index (MIR) à la fin de la mise à jour synchronisée des fichiers de données (F1, F2, ... Fm).

2. Procédé selon la revendication 1, appliqué à des fichiers de données (F1, F2, ... Fm) auxquels sont affectés des zones à accès séquentiels d'une mémoire (3).

3. Circuit électronique, comportant au moins une mémoire à accès séquentiel (3) et un circuit (2) de gestion d'index de cette mémoire, **caractérisé en ce qu'**il comporte :
plusieurs zones de ladite mémoire affectées à des fichiers de données (F1, F2, ... Fm) ;
au moins une zone affectée à un fichier d'index (IF) dont chaque enregistrement contient des index des fichiers de données ;
au moins un élément (MIR) de stockage de l'index courant du fichier d'index ; et
des moyens pour la mise en oeuvre du procédé selon la revendication 1 ou 2.

4. Carte à puce comprenant un circuit selon la revendication 3.

## Patentansprüche

1. Ein Verfahren zum Aktualisieren zyklischer Datendateien (F1, F2, ... Fₘ) in sequentiellem Zugriff von Speicherelementen, **dadurch gekennzeichnet, dass** das Verfahren die folgenden Schritte aufweist:
Speichern in mindestens einer Indexdatei (IF), selbst zyklische, entsprechende Indizes (Ii₁, Ii₂, ... Iiₘ) von Datendateien;
Speichern in mindestens einem Indexregister (MIR) den laufenden Index (IFi) der Indexdatei;
Kopieren des Inhalts einer laufenden Aufzeichnung der Indexdatei (IF) in der nächsten Aufzeichnung derselben Datei vor jedem synchronen Aktualisieren von Datendateien (F1, F2, ... Fₘ);
Aktualisieren einer laufenden Datei mit einem neuen Wert;
Aktualisieren des Index in der nächsten Aufzeichnung der Indexdatei; und
Aktualisieren des Indexregisters (MIR) am Ende der synchronen Aktualisierung der Datendateien (F1, F2, ... Fₘ).

2. Das Verfahren nach Anspruch 1 angewandt auf Datendateien (F1, F2, ... Fₘ) denen sequentielle Zugriffsbereiche eines Speichers (3) zugewiesen sind.

3. Eine elektronische Schaltung, die mindestens einen sequentiellen Zugriffsspeicher (3) und eine Indexmanagementschaltung (2) dieses Speichers aufweist, **dadurch gekennzeichnet, dass** die Schaltung folgendes aufweist:
mehrere Bereiche des erwähnten Speichers zugewiesen den Datendateien (F1, F2, ... Fₘ);
mindestens ein Bereich zugewiesen an eine Indexdatei (IF), wobei jede Aufzeichnung derselben Indizes von den Datendateien enthält;
mindestens ein Element (MIR) zur Speicherung des laufenden Index der Indexdatei; und
Mittel zum Implementieren des Verfahrens von Anspruch 1 oder 2.

4. Eine Smartcard, die die Schaltung nach Anspruch 3 aufweist.

## Claims

1. A method for updating cyclic data files (F1, F2, ... Fm) in sequential access storage elements, **characterized in that** it comprises the steps of :
storing, in at least one index file (IF), itself cyclic, respective indexes (Ii_{1'} Ii₂, ... Iiₘ) of the data files ;
storing in at least one index register (MIR), the current index (IFi) of the index file;
copying the content of a current recording of the index file (IF) in the next recording of the same file before each synchronous update of the data files (F1, F2, ... Fm);
updating a current file with a new value;
updating the index in the next recording of the index file; and
updating the index register (MIR) at the end of the synchronous update of the data files (F1, F2, ... Fm).

2. The method of claim 1, applied to data files (F1, F2, ... Fm) to which sequential access areas of a memory (3) are assigned.

3. An electronic circuit comprising at least one sequential access memory (3) and an index management circuit (2) of this memory, **characterized in that** it comprises:
several areas of said memory assigned to data files (F1, F2, ... Fm) ;
at least one area assigned to an index file (IF), each recording of which contains indexes of the data files;
at least one element (MIR) for storing the current index of the index file; and
means for implementing the method of claim 1 or 2.

4. A smart card comprising the circuit of claim 3.
